# EUROPEAN PATENT APPLICATION

(11) **EP 4 279 765 A1**
(43) Date of publication of application: **22.11.2023**
(21) Application number: 23174139.8
(22) Date of filing: 18.05.2023
(51) Int. Cl.: F16H 3/00, B60K 17/04, F16H 48/08, F16H 63/30

(54) **WHEEL HUB FOR A VEHICLE AXLE COMPRISING AN IMPROVED INTEGRATED REDUCTION SYSTEM**

(30) Priority: 19.05.2022 IT 202200010442
(71) Applicant: IVECO S.P.A., 10156 Torino (IT)
(72) Inventor: PEREIRA DE LEMOS, Josè Francivaldo, 10156 TORINO (IT); SANTORO, Francesco, 10156 TORINO (IT)
(74) Representative: Studio Torta S.p.A.

(57) **Abstract**

A wheel hub (10) for an axle (4) of a vehicle (1) comprising a gearing (15) housed in a chamber (13) defined between the wheel hub (10) and a carcass (5) of the axle (4) and configured to vary the torque transmitted by an axle shaft (7a, 7b) of the axle (4) to a respective wheel hub (10), the gearing (15) comprising a gearing (21) configured to define multiple transmission ratios depending on the position of the axle shafts (7a, 7b) which is free to move along one of its axes (B) under the action of actuating means (30) configured to control its position.

## Description

### CROSS-REFERENCE TO RELATED APPLICATIONS

This patent application claims priority from Italian patent application no. 102022000010442 filed on May 19, 2022, the entire disclosure of which is incorporated herein by reference.

### TECHNICAL FIELD

The present invention relates to a wheel hub for a vehicle axle, in particular a wheel hub for a heavy vehicle axle comprising a reduction system integrated in the hub itself.

### STATE OF THE PRIOR ART

As is well known, it is essential to reduce the torque from the drive shaft in relation to the axles in a wheeled vehicle provided with at least one internal combustion engine.

As is also well known, vehicles are normally equipped with a differential unit configured to differentiate the torque coming from the drive shaft between a pair of axle shafts, for known dynamic requirements while the vehicle is being driven.

The torque reduction referred to above is normally achieved by means of known gearbox devices located between the drive shaft and the said differential unit.

However, in the case of heavy vehicles, these reduction ratios are known to be insufficient in number to be able to provide an adequate reduction ratio between the torque at the drive shaft and the torque at the wheels of the axle under the various load conditions.

In fact, it is clear that a heavy vehicle, such as a lorry, has to bear a considerable difference in weight between the unladen condition and the fully laden condition, and so the highest available gears are not necessarily those best suited to the unladen condition.

For this purpose, reduction systems are known to be integrated into the wheel hubs. However, these systems need further improvements in order to increase their efficiency.

There is therefore a need to provide a reduction system for a vehicle axle which can solve the problems mentioned above.

The object of the present invention is to meet the above need in an optimized and cost-effective manner.

### SUMMARY OF THE INVENTION

Said object is achieved by means of a wheel hub for an axle provided with an integrated reduction system, and a vehicle, as claimed in the attached claims.

### BRIEF DESCRIPTION OF THE DRAWINGS

For a better understanding of the present invention, a preferred embodiment is described below by way of nonlimiting example and with reference to the accompanying drawings, wherein:
- Figure 1 is a schematic top sectional view of a vehicle provided with wheel hubs according to the invention;
- Figure 2 is a schematic sectional view of an axle provided with wheel hubs according to the invention;
- Figures 3A-3B are sectional views of an axle portion and a vehicle hub according to the invention in a first operating phase; and
- Figures 4A-4B are sectional views of an axle portion and a vehicle hub according to the invention in a second operating phase.

### DETAILED DESCRIPTION OF THE INVENTION

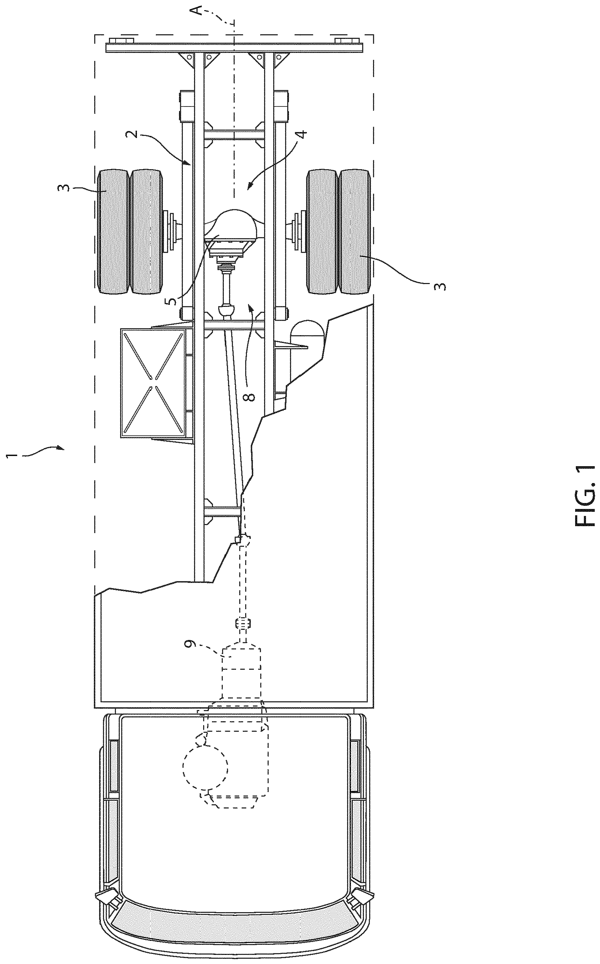

Figure 1 shows a commercial or heavy vehicle 1 comprising a frame 2 extending along a longitudinal axis A and movable via wheels 3 carried by an axle 4.

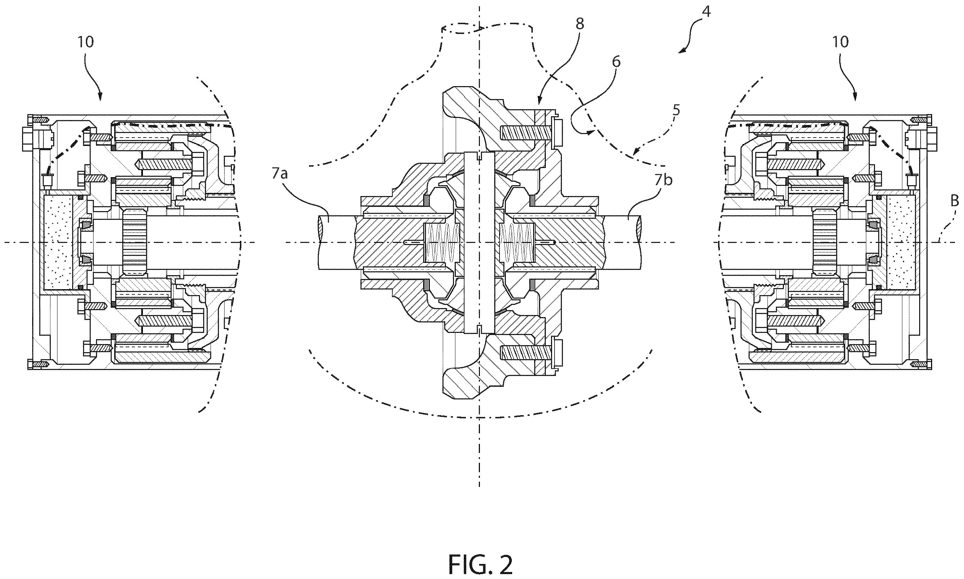

As shown in Figure 2, the axle 4 comprises a carcass 5 defining a space 6 suitable for housing, at least partially, a pair of axle shafts 7a, 7b extending along an axis B transverse to the longitudinal axis A of the vehicle 1.

In particular, the axle shafts 7a, 7b are operatively connected, at one end, to a transmission 8 of the vehicle 1, and at the opposite end, to respective wheel hubs 10. In the exemplary case shown, the transmission 8 illustrates a differential bevel gear, but it is understood that it could be any torque transmission device, such as a differential, operatively connected to a torque source 9 such as a power train, for example an internal combustion engine.

In particular, the wheel hubs 10 carried by the carcass 5 in a rotationally free way, each configured to cooperate with the respective end portion of the axle shafts 7a, 7b, as described in detail below.

With regard to the wheel hubs 10, for simplicity, reference is only made to one of them, for example the righthand one, and the following considerations apply equally to the left-hand wheel hub, of course, the structure being described herein is mirrored in relation to the longitudinal axis A of the vehicle 1.

The wheel hub 10, as mentioned above, is supported in a rotationally free way in relation to the carcass 5, in particular it is hollow and coaxial with the transversal axis B. In the example described herein, the wheel hub 6 is supported by support elements 11, such as for example a pair of tapered bearings and sealing means 8, such as O-rings.

In particular, the hub 10 comprises a substantially cylindrical main portion 10a carried by the carcass 2 and an annular portion 10b housed in an end portion of the carcass 5 and carried by the main portion 10a. Advantageously, the main portion 10a and the annular portion 10b are coupled by threaded means, of a known type, and optionally with the aid of additional intermediate parts, according to the assembly, which depends on the type and weight of the vehicle, and therefore not described in detail.

The cylindrical portion 10a defines, with the final part of the carcass 5, a chamber 13 which is axially bounded along the axis B by an axial wall 10c of the main portion 10a, and on the other side, by the final part of the carcass 5; this chamber 13 is radially bounded around the axis B by the inner surface of the main portion 10a of the wheel hub 10.

The wheel hub 10 is operatively connected to the axle 4 by a gearing 15 housed inside the chamber 13 and configured to connect the wheel hub 10 to the axle shaft 7b with multiple different transmission ratios, i.e., so that the speed/torque at the axle shaft 7b is different from the speed/torque at the wheel hub 10.

In particular, the chamber 13 houses oil in order to facilitate the operation of the gearing 15 contained therein. Advantageously, the oil is inserted through an oil passage made in the axial wall 10c.

According to both embodiments shown, the wheel hub 10 is provided with a gearing 15 which allows two different transmission ratios to be obtained between the axle shaft 7b and the wheel hub 10.

In particular, the gearing 15 also comprises a gearing 16 configured to cooperate with the axle shaft 7b according to a first and a second operating condition characterized by two different transmission ratios between the axle shaft 7b and the wheel hub 10.

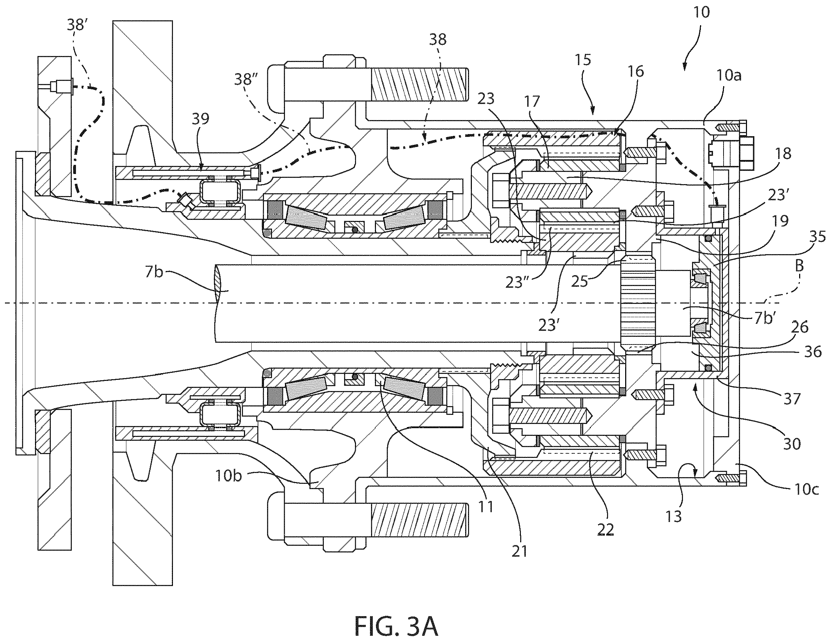

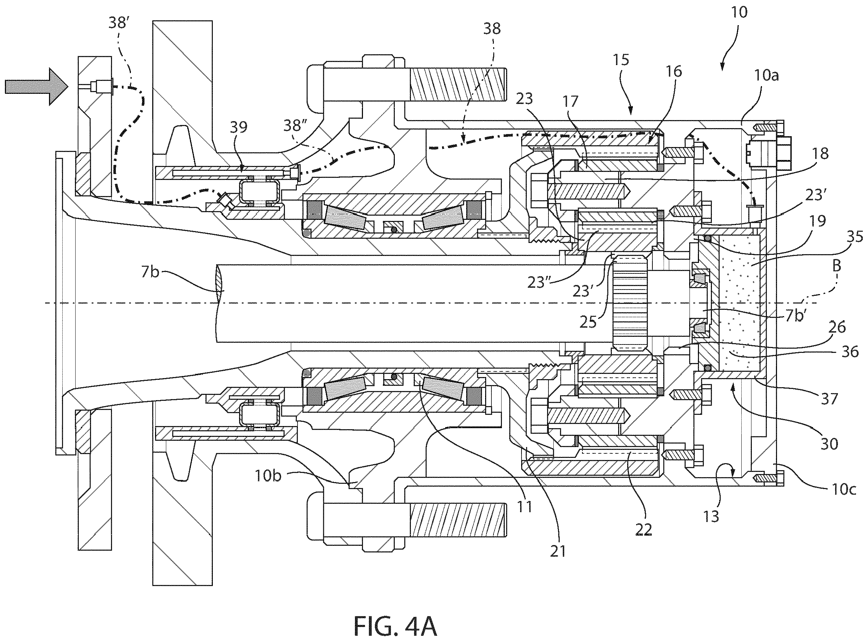

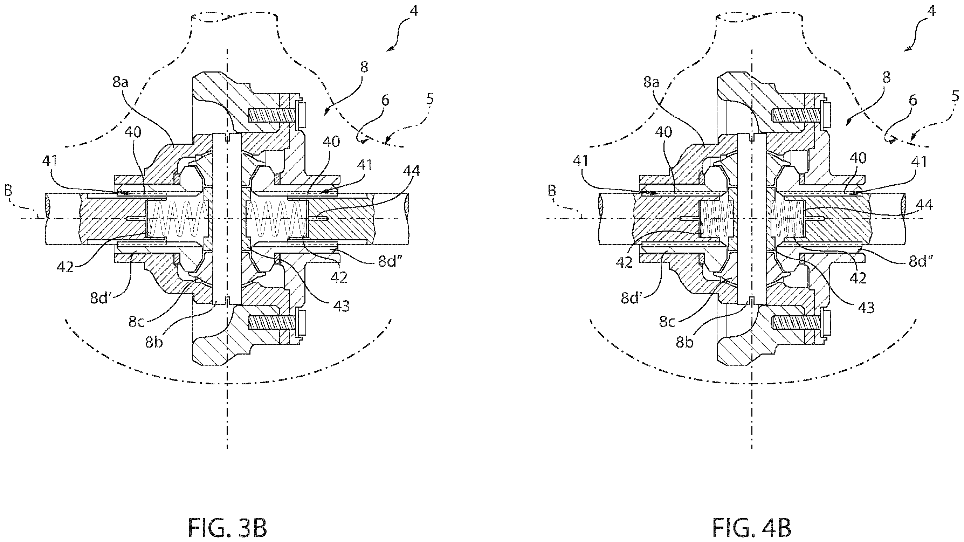

In the attached Figures 3A-3B, 4A-4B, the gearing 16 is an epicyclic gearing comprising a plurality of satellites 17 supported by pins 18 integral with a carrier 19 connected to the hub 10 and configured to mesh with a portion 21 integral with the carcass 5.

In particular, the portion 21 integral with the carcass 5 is advantageously in the shape of a bell open towards the chamber 13 so that it faces the axial wall 6c. The portion 21 is configured to house satellites 17 on the inside. In particular, the portion 21 defines a toothing 22 configured to mesh with the satellites 17.

The gearing 16 also includes a solar 23 rotatably carried between the carcass 5 and the carrier 19 and defining a toothing 23' suitable for meshing with the satellites 18.

The axle shaft 7b comprises a toothing 25, which is rigidly carried by it and configured to cooperate selectively with the solar 23 or the carrier 19. In particular, the solar 23 defines a second toothing 23" suitable for engaging the toothing 25, and the carrier 19 defines a toothing 26 suitable for engaging the toothing 25.

Consequently, the axle shaft 7b is moved along the axis B so as to reach the selective conditions of meshing between the toothings 25 and 23'' or 25 and 26, respectively defining a change in the speed/torque between the axle shaft 7b and the wheel hub 10, or transmission without a change in the speed/torque between the axle shaft 7b and the wheel hub 10.

According to the advantageous embodiment described, the movement of the axle shaft 7b between the first and second operating meshing conditions mentioned above is carried out by the actuating means 30 configured to directly move the axle shaft 7b.

Preferably, the actuating means 30 are configured to act on an outer end 7b' of the axle shaft 7b, and even more preferably they are pneumatic actuating means 30.

In particular, the actuating means 30 comprise a piston 35, which is carried slidingly and hermetically in a chamber 36 separated from the chamber 13 and carried axially integral with but free to rotate relative to the outer end 7b' of the axle shaft 7b. Accordingly, the chamber 36 is divided into two portions fluidically separated from each other by the piston 35.

The chamber 36 is advantageously bounded by a support 37 rigidly carried by the carrier 19 and cooperating in contact with the axial portion 10c of the wheel hub 10.

One of the two above-mentioned portions of the chamber 36 is connected to a pressurized fluid source of the vehicle 1, not shown, configured to inject a fluid and allow the fluid to escape from the aforementioned portion. Advantageously, this fluid is compressed air contained in a tank of a vehicle or common to another operating system of the vehicle 1.

In particular, the fluid is transported from the vehicle source to the portion of the chamber 36 via a duct 38. In order to allow passage from the carcass 5, which is fixed, to the wheel hub 10, the duct 38 is divided into two portions 38', 38'', fixed and rotating, respectively, separated by a fluid passage device 39, comprising a part integral with the carcass 5 and a rotating part integral with the wheel hub 10, in particular with the annular portion, and configured to fluidically connect the two portions 38', 38" to each other.

At one inner end 7b" opposite the inner end 7b' of the axle shaft 7b, the axle 4 comprises elastic means configured to hold the axle shaft 7b in one of the above two positions, specifically as shown, in the position of meshing between the toothings 25 and 26 if there is no pressurized fluid in the chamber 36.

In particular, the inner end 7b' ' cooperates with the transmission 8 via a splined coupling made between a toothing 40 integral with an output element of the transmission 8 and a toothing 41 integral with the axle shaft 7b. The toothings 40 and 41 define a splined coupling between them which allows continuous coupling between the axle shaft 7b and the transmission 8 yet the movement of the axle shaft 7b along the axis B.

In particular, the transmission 8 comprises a differential mechanism which is therefore equipped with a carrier 8a driven by the power train 9 of the vehicle, and which drives a plurality of pins 8b supporting, free to rotate, a plurality of satellites 8c cooperating with respective output toothed wheels 8d', 8d", which integrally rotate with the axle shaft 7b, via the splined coupling described above.

Advantageously, the elastic means comprise a spring 42 housed between the inner portion 7b" of the axle shaft and the pins 8b of the differential mechanism of the transmission 8. In particular, the spring 42 can be a helical spring and comprise respective end spring holders 43, 44.

Advantageously, the spring 42 is carried by the spring holders 43, 44 so that one of them cooperates in a sliding manner with one of the axle shaft 7b and the transmission 8, and the other of them is rigidly carried by the other one.

In the embodiment described, one spring holder 44 cooperates integrally with the axle shaft 7b, i.e., rigidly fixed to it, and the other spring holder 43 cooperates by sliding contact with the pins 8b.

The operation of the embodiment of the invention described above is as follows.

In the operating condition in Figures 3A-3B, no fluid is injected into the chamber 36. Consequently, the spring 42 holds the axle shaft 7a, 7b in the meshing condition of the teeth 25 and 27, thus transmitting the same torque transmitted by the transmission 8 to the axle shafts 7a, 7b to the wheel hubs 10.

In the operating condition in Figures 4A-4B, fluid is injected into the chamber 36, which fluid, by exerting pressure on the piston 35, overcomes the resistance imparted by the force generated by the spring 42, thereby moving the axle shaft 7b. Due to the splined coupling between the toothings 40, 41, the axle shaft 7b can move while maintaining the continuous torque transmission until it is positioned in the meshing condition of the teeth 23'' and 25. In this configuration, more torque is transmitted, at a lower speed, to the wheel hub 10.

The injection of the fluid via the duct 38 can be controlled manually by the vehicle operator by means of a respective actuation in the cab, or automatically based on the processing of data received by the vehicle control unit from vehicle sensor means.

The advantages of a wheel hub for a vehicle axle comprising an integrated reduction system according to the invention are clear from the foregoing.

The system set out herein allows a reduction system integrated in a wheel hub to be provided in a versatile, compact, inexpensive, and easy-to-install and maintain way compared to the known systems.

The additional reduction system and the reduction range that can be optimized depending on the type and size of the vehicle allow greater reduction in fuel consumption and therefore in pollutant emissions.

In particular, the use of a gearing integrated in the wheel hub enables high transmission ratios to be achieved through a robust gear suitable for the high loads of a heavy vehicle axle.

The pneumatic actuation system is particularly compact and suitable for heavy vehicles. The junction device between the fixed and rotating portions is also particularly compact and further prevents the penetration of pollutants from the external environment into the chamber 13 of the wheel hub 10.

Furthermore, the presence via the compressed fluid duct can be automated and stored in the electronic unit, and the control variables can be pre-stored or modified by the driver.

Lastly, it is clear that modifications and variations may be made to the wheel hub for a vehicle axle comprising an integrated reduction system according to the present invention, without however departing from the scope of protection defined by the claims.

Obviously, as mentioned, the carcass 4 and the wheel hub 10 can have different shapes and be made in more and different pieces.

Furthermore, the toothed wheels and the gears described herein may vary, and elements not described and known to exist could be present for the assembly of an axle according to the present invention.

Clearly, the above description refers to an air-powered actuation which appears to be the most effective and inexpensive, however, the use of equivalent actuating means, such as electromagnetic and mechanical actuators, cannot be excluded.

## Claims

1. A wheel hub (10) for an axle (4) of a vehicle (1) comprising:
- a hollow portion (10a) carried in a rotationally free way on a carcass (5) of said axle (4) around an axis (B) of the latter, said portion (10a) defining a chamber (13) between one of its inner walls and said carcass (5),
- a gearing (15) housed inside said chamber (13) and configured to vary the torque transmitted by an axle shaft (7a, 7b) of said axle (4) and said wheel hub (10), said gearing (15) comprising a gearing (16),
- an actuator device (30) configured to move said axle shaft (7a, 7b) along said axis (B) with respect to said casing (A),
said gearing (16) comprising:
a carrier (19) integral with said portion (10a) and defining a toothing (26);
a plurality of satellites (17) meshing with said carcass (5) of said axle (4) and carried by said carrier (21),
said axle shaft (7a, 7b) carrying a toothing (25) configured to cooperate selectively with:
- said toothing (26) of said carrier, or
- said plurality of satellites (17).
defining different transmission ratios between said axle shaft (7a, 7b) and said wheel hub (10).

2. The wheel hub according to claim 1, wherein said plurality of satellites (17) meshes with the solar (23) carried sliding with respect to said carrier (19) and said carcass (5), said solar (23) defining a first toothing (23') meshing with said satellites (17) and a second toothing (23") meshing with said toothing (25) of said axle shaft (7a, 7b).

3. The wheel hub according to claim 2, wherein said carrier (19) is integral with a portion (22) of said hub (10), said portion (22) housing on the inside said satellites (17) and defining a toothing (23) meshing with said satellites (17).

4. The wheel hub according to one of the preceding claims, wherein said satellites (17) are supported by respective pins (18), said pins (18) rigidly supported by said carrier (21).

5. The wheel hub according to one of the preceding claims, wherein said actuator device (30) is pneumatic.

6. The wheel hub according to claim 5, wherein said actuator device (30) comprises a piston (35) housed in a chamber (36) made between said carrier (19) and said wheel hub (10), said piston (35) being integral with said axle shaft (7a, 7b) and housed sliding and hermetically in said chamber (36) dividing said chamber into two portions, one portion of said chamber (36) being connectable to a source of pressurized fluid of said vehicle (1).

7. An axle (4) for a vehicle comprising:
- a carcass (5) defining a space (6) along an axis (B);
- a pair of axle shafts (7a, 7b) housed at least partially in said space (6) and comprising respective inner ends (7b") cooperating with a transmission (8) of said vehicle (1) configured to supply a driving torque to said axle shafts (7a, 7b);
- respective wheel hubs (10) carried in a rotationally free way by said carcass (5) made according to one of the preceding claims.

8. The axle according to claim 7, comprising a duct (38) fluidically connecting said chamber (36) of said wheel hub (10) to a source of pressurized fluid of said vehicle (1) .

9. The axle according to claim 8, wherein said duct (31) comprises a first portion (38') integral with said carcass (5) and a second portion (38") integral with said wheel hub (10) and a fluid passage device (39) configured to allow fluidic connection between said first and second portions (38', 38").

10. The axle according to claim 9, wherein said fluid passage device (39) comprises a part integral with said carcass (5) and fluidically connected to said first portion (38') and a part integral with said wheel hub (10), fluidically connected to said second portion (38"), and supported rotationally free by said part integral with said carcass (5), said parts of said fluid passage device (39) being fluidically connected to each other.

11. The axle according to one of claims 7 to 10, wherein an inner end (7b") of said axle shaft (7a, 7b) is operatively connected to said transmission (8) via a splined connection.

12. The axle according to claim 11, wherein said axle shaft (7a, 7b) cooperates with elastic means operatively interposed between said inner end (7b") and said transmission (8), said elastic means exerting a force capable of opposing the displacement of said axle shaft (7a, 7b) from a position in which said toothing (25) meshes with said toothing (26) of said carrier (19).

13. The axle according to claim 12, wherein said elastic means comprise a spring (42) and said transmission (8) comprises a differential, said spring (42) being housed inside output toothed wheels (8d', 8d") of said differential and cooperating in contact, at a first end, with a pin (8b) of said differential, and at a second end, with said inner end (7b").

14. The axle according to claim 13, wherein one of said first and second ends of said spring (42) is rigidly carried by a spring holder (43, 44) integral with one of said inner end (7b") and said pin (8b) and the other of said first and second ends of said spring (42) slidingly cooperates with the other of said inner end (7b") and said pin (8b).

15. A vehicle (1) comprising a frame (2), a power train (9), a transmission (8) and at least one axle (4) according to claims 7 to 14.
